Europäisches Patentamt

European Patent Office

Office européen des brevets

(11) Veröffentlichungsnummer: **0 046 844**
**B1**

# (12) EUROPÄISCHE PATENTSCHRIFT

(45) Veröffentlichungstag der Patentschrift:
25.04.84

(51) Int. Cl.³: **B 60 S 1/24**

(21) Anmeldenummer: 81103632.6

(22) Anmeldetag: 12.05.81

(54) **Wischvorrichtung für Scheiben von Kraftfahrzeugen.**

(30) Priorität: 03.09.80 DE 3033044

(43) Veröffentlichungstag der Anmeldung:
10.03.82 Patentblatt 82/10

(45) Bekanntmachung des Hinweises auf die Patenterteilung:
25.04.84 Patentblatt 84/17

(84) Benannte Vertragsstaaten:
DE FR GB IT

(56) Entgegenhaltungen:
DE - A - 2 550 369
DE - B - 1 206 324
DE - B - 2 014 051

(73) Patentinhaber: **ROBERT BOSCH GMBH, Postfach 50,
D-7000 Stuttgart 1 (DE)**

(72) Erfinder: **Heinrich, Laurent, Rue Staedel Nr. 5,
F-67100 Strasbourg (FR)**
Erfinder: **Kolb, Erich, Kirchbachstrasse 48, D-7580 Bühl
(DE)**

Wischvorrichtung für Scheiben von Kraftfahrzeugen

### Stand der Technik

Die Erfindung geht aus von einer Wischvorrichtung nach der Gattung des unabhängigen Anspruchs. Es ist schon eine Wischvorrichtung bekannt (DE-A-2 550 369), bei der der Gelenkmechanismus als veränderbares Viergelenk ausgebildet ist, das je nach Einstellung, einen dieser zugeordneten Pendelwinkel des Wischblatts bewirkt. Diese Pendelwinkelveränderung zeigt sich durch die Verlagerung beider Pendelumkehrstellungen.

Bei einer anderen bekannten Wischvorrichtung (DE-B-2 014 051) ist zur Veränderung der den Pendelwinkel bestimmenden wirksamen Schwingenlänge, diese Schwinge zweiteilig ausgebildet. Dabei ist der diese Schwingenlänge bestimmende Gelenkzapfen an einem in einen Führungsrahmen gegen Federkraft verschiebbaren Schlitten befestigt. Auch bei dieser Anordnung ändert sich der Pendelwinkel durch Verlagerung beider Pendelumkehrstellungen des Wischblattes, wenn die wirksame Schwingenlänge verändert wird.

Bei einer weiteren bekannten Wischvorrichtung (DE-B-1 206 324) ist zum Überführen des Wischblatts aus seiner einen Pendelumkehrlage in eine außerhalb des Wischfeldes liegende Parkstellung, zwischen der Abtriebskurbel des Antriebsaggregats und der Schubstange ein Klinkenmechanismus angeordnet, der während des Wischbetriebs verriegelt ist. Nach dem Stillsetzen der Wischvorrichtung und dem Lösen der Sperrklinke, kann eine zum Mechanismus gehörende zweiteilige Koppel ausgeknickt werden. Diese Ausknickbewegung wird über die Schubstange auf die Schwinge und damit auf das Wischblatt übertragen, so daß das Wischblatt in seine Parkstellung überführt wird.

### Vorteile der Erfindung

Die erfindungsgemäße Wischvorrichtung mit den kennzeichnenden Merkmalen des unabhängigen Anspruchs hat demgegenüber den Vorteil, daß die angestrebte Überführung des Wischblatts in seine außerhalb des Wischfeldes liegende Parklage durch einen Mechanismus bewirkt wird, der losgelöst vom Antriebsaggregat im Bereich der Wischerwelle angeordnet ist, wo der dafür erforderliche Raum ohne Schwierigkeiten bereitgestellt werden kann.

Durch die in den abhängigen Ansprüchen aufgeführten Maßnahmen sind vorteilhafte Weiterbildungen und Verbesserungen der im unabhängigen Anspruch angegebenen Wischvorrichtung möglich.

### Zeichnung

Ein Ausführungsbeispiel der Erfindung ist in der Zeichnung dargestellt und in der nachfolgenden Beschreibung näher erläutert. Es zeigt

Fig. 1 eine Draufsicht auf einen Mechanismus zum Bewegen eines Wischblatts mit schematischer Darstellung des Antriebs,

Fig. 2 einen Teilschnitt durch die Wischervorrichtung im Bereich eines Elektromagneten zum Steuern des Mechanismus,

Fig. 3 eine Schemaskizze der erfindungsgemäßen Wischvorrichtung, bei der sich das Wischblatt in seiner einen Umkehrlage befindet,

Fig. 4 die Schemaskizze gemäß Fig. 3 mit dem Wischblatt in seiner anderen Umkehrlage und Fig. 5 die Schemaskizze nach Fig. 4, wobei das Wischblatt aus seiner anderen Umkehrlage in eine außerhalb des Wischfeldes liegende Ablagestellung überführt ist.

### Beschreibung des Ausführungsbeispieles

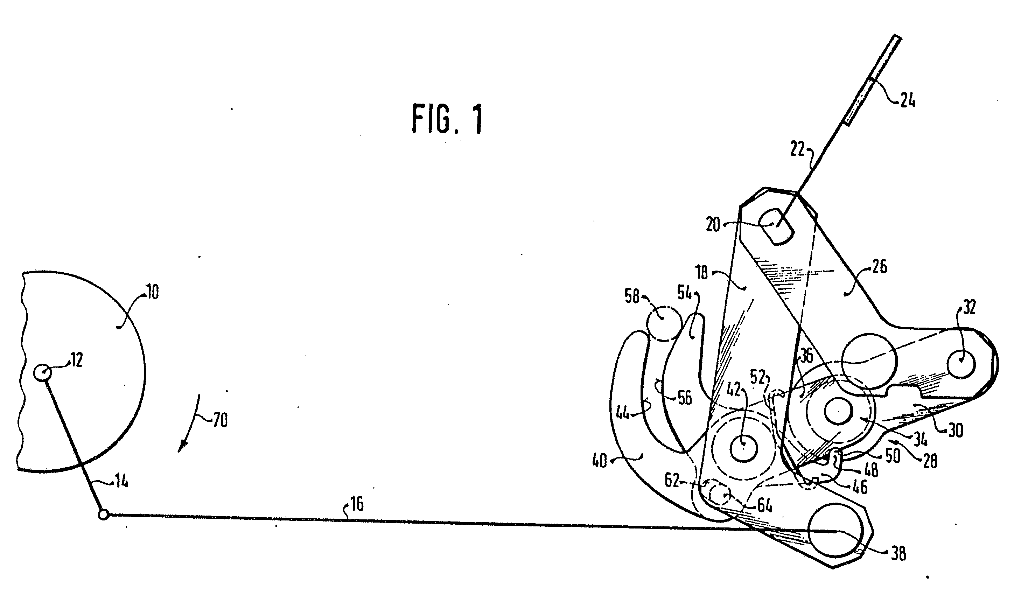

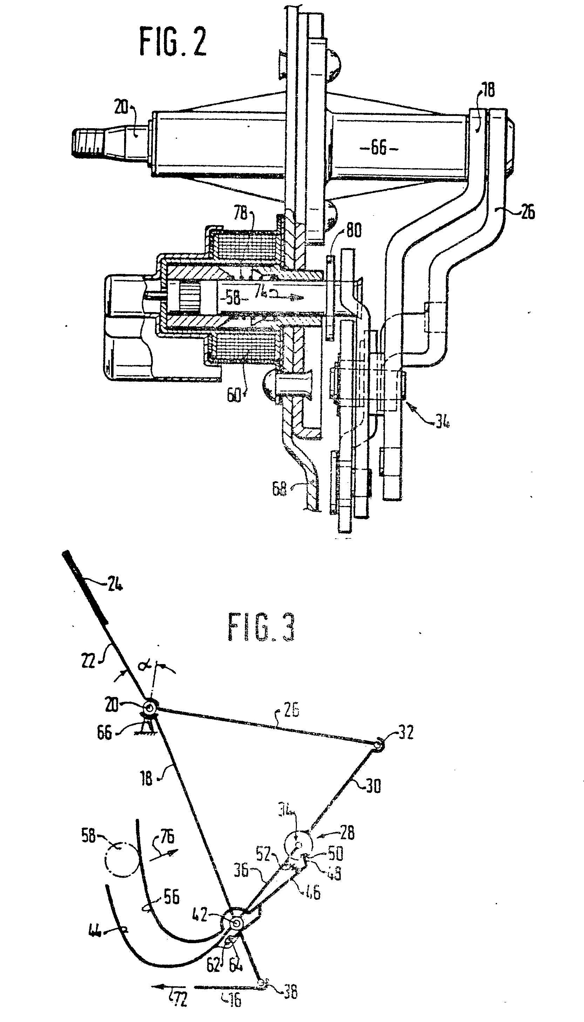

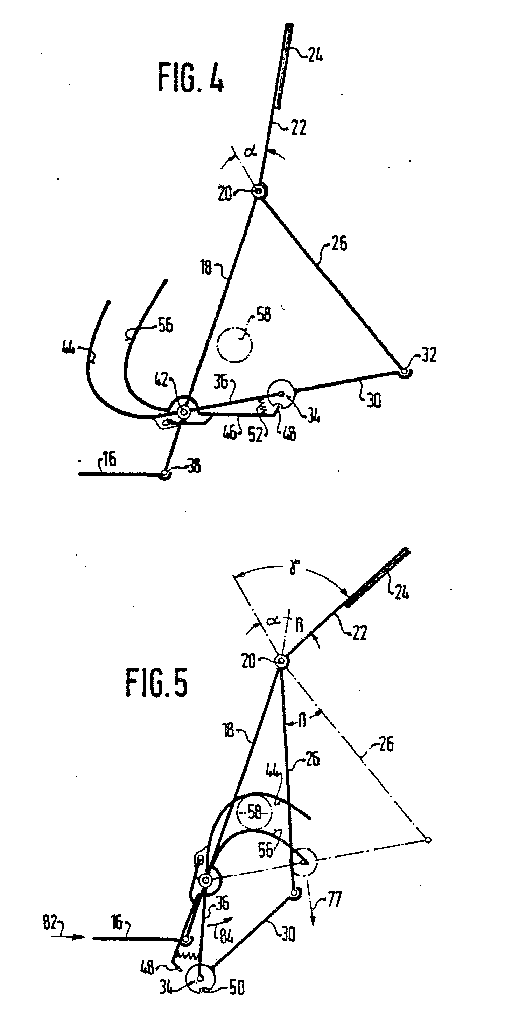

Zu einer teilweise in Fig. 1 dargestellten Wischvorrichtung gehören ein Antriebsaggregat 10, an dessen Abtriebswelle 12 eine Kurbel 14 befestigt ist, an deren freiem Ende eine Schubstange 16 angelenkt ist. An dem von der Kurbel 14 abgewandten Ende der Schubstange 16 ist diese gelenkig mit einem Ende einer Schwinge 18 verbunden, deren anderes Ende freischwingend und koaxial zu einer Wischerwelle 20 gelagert ist. Mit der Wischerwelle 20 ist ein Wischerarm 22 fest verbunden und ein an dem freien Ende des Wischerarms 22 angebrachtes Wischblatt 24 liegt auf einer nicht dargestellten, zu reinigenden Kraftfahrzeugscheibe auf. An dem von dem Wischerarm 22 abgewandten Ende der Wischerwelle 20 ist ein Schwenkhebel 26 befestigt (Fig. 1 und 2), an dessen von der Befestigungsstelle abgewandten Ende eine Koppel 28 angelenkt ist. Die Koppel 28 ist zweiteilig ausgeführt. Ein erstes Koppelteil 30 weist die Gelenkverbindung 32 am Schwenkhebel 26 auf. An dem von Schwenkhebel 26 abgewandten Ende des ersten Koppelteils ist ein Gelenk 34 angeordnet, das eine Verbindung mit dem zweiten Koppelteil 36 bildet. Das von der Gelenkverbindung 34 abgewandte Ende des zweiten Koppelteils 36 ist zwischen der Anlenkstelle 38 der Schubstange 16 an der Schwinge 18 und der Lagerstelle der Schwinge 18 im Bereich der Wischerwelle 20 gelenkig mit der Schwinge 18 verbunden. Das zweite Koppelteil 36 weist einen gekrümmten, armförmigen Fortsatz 40 auf, der über die Gelenkstelle 42 zwischen Koppelteil 36 und der Schwinge 18 hinausragt. Der Fortsatz 40 ist an seiner einen Seite mit einer Steuerkurve 44 versehen. Um die Gelenkverbindung 34 zwischen dem ersten Koppelteil 30 und dem zweiten Koppelteil 36 im Betrieb der Wischanlage starr zu halten ist an der Gelenkstelle 42 ein Sicherungshebel 46 angelenkt. Der Sicherungshebel 46 greift mit einer Rastnase 48 in eine Rastaufnahme 50, welche sich in der dargestellten Stellung der Koppel 28 deckungsgleich in den beiden Koppelteilen 30, 36 befindet. Damit die Rastnase 48 im Betrieb der Wischvorrichtung in der Rastaufnahme 50 gesichert ist, greift an dem Sicherungshebel 46 ein vorgespanntes Federelement 52 an, welches die Rastnase 48 in die Rastaufnahme 50 zwingt und somit das Gelenk 34 verriegelt. Der Sicherungshebel 46 ist ebenfalls als zweiarmiger Hebel ausgebildet und weist eine über die Gelenkstelle 42 hinausragende, hebelarmartige Verlängerung 54 auf, deren eine Kante ebenfalls als Steuerkurve 56 ausgebildet ist. Die Steuerkurve 44 des Fortsatzes 40 und die Steuerkurve 56 der Verlängerung 54 wirken während bestimmten Betriebszuständen der Wischvorrichtung mit einem Steueranschlag 58 zusammen, der in den Fig. 3 und 4 der Zeichnung strichpunktiert dargestellt ist. Der Steueranschlag 58 ist durch einen bolzenförmigen Kern eines Elektromagneten 60 gebildet, (Fig. 2). In der in Fig. 3 gezeigten Betriebsstellung der Wischvorrichtung ist der Elektromagnet nicht erregt, so daß der Steueranschlag 58 mit keiner der beiden Steuerkurven 44 bzw. 56 zusammenwirken kann. Dies kommt in der Fig. 3 dadurch zum Ausdruck, daß der Steueranschlag 58 strichpunktiert dargestellt ist. Weiter ist noch zu bemerken, daß der Fortsatz 40 in dem Bereich, in welchem er die Verlängerung 54 des Sicherungshebels 46 überdeckt, mit einem Langloch 62 versehen ist, in welches ein Vorsprung 64 der Verlängerung 54 ragt. Die Anordnung des Langlochs 62 und des mit diesem zusammenwirkenden Vorsprungs 64 bildet eine Schwenkbegrenzung für den Sicherungshebel 46 und für dessen Verlängerung 54.

Die Wischerwelle 20 ist in einem Lagerelement 66 geführt, das ebenso wie der Elektromagnet 60 an einem gestellfesten Karosserieteil 68 befestigt ist (Fig. 2).

Der Betrieb der Wischvorrichtung soll nun anhand der Schemaskizzen gemäß den Fig. 3 bis 5 erläutert werden. Dabei werden alle die Bezugzeichen aus den Fig. 1 und 2 übernommen, die zum Verständnis des Betriebs der Wischvorrichtung erforderlich sind. Fig. 3 zeigt die hier interessierenden Teile der Wischvorrichtung, in einer Stellung, in welcher sich das Wischblatt 24 in seiner einen Umkehrlage befindet. Wenn nun das Antriebsaggregat 10 läuft und die Kurbel 14 in Richtung des Pfeiles 70 (Fig. 1) umläuft, wird die Schubstange 16 in Richtung des Pfeiles 72 (Fig. 3) bewegt. Dabei wird über die Anlenkstelle 38 die frei schwingende Schwinge 18, über die Gelenkstelle 42, die Koppel 28 und über die Gelenkverbindung 32 auch der Schwenkhebel 26 mitgenommen. Der fest mit der Wischerwelle 20 verbundene Schwenkhebel 26 nimmt nun die Wischerwelle 20 und den an dieser befestigten Wischerarm 22 samt Wischblatt 24 mit, bis dieses seine in Fig. 4 gezeigten andere Umkehrstellung erreicht hat. Durch die umlaufende Kurbel 14, die Schubstange 16, die Schwinge 18, die Koppel 28 und den Schwenkhebel 26 wird dem Wischerarm 22 eine Schwenkbewegung mitgeteilt, die sich über den

Winkel $\alpha$ erstreckt. Solange die Wischvorrichtung in Betrieb ist, bestreicht also das Wischblatt 14 ein segmentförmiges Wischfeld mit dem Segmentwinkel $\alpha$. Während dieser Arbeitsbewegung der Wischvorrichtung bleibt das durch die Gelenke 20, 42, 28 und 32 gebildete Viergelenk in sich starr, weil das Federelement 52 die Rastnase 48 in die Rastaufnahme 50 drückt, so daß die Koppel 28 wie ein einteiliges starres Bauteil wirkt.

Wenn sich nun das Wischblatt 24 in der in Fig. 3 dargestellten Stellung befindet und die Wischvorrichtung abgeschaltet werden soll, wird dem elektromotorisch betätigten Antriebsaggregat 10 der Wischvorrichtung ein entsprechendes Signal übermittelt. Durch dieses Signal wird zunächst der Elektromagnet 60 erregt, wodurch der als Magnetkern ausgebildete Steueranschlag 58 in Richtung des Pfeiles 74 geschoben wird (Fig. 2). Das Anziehen des Elektromagneten 60 geschieht noch bevor die Schwinge 18 und der mit ihr verbundene Mechanismus aus der in Fig. 3 dargestellten Betriebsstellung herausgeschwenkt worden ist. Der durch das Erregen des Elektromagneten 60 bewegte Steueranschlag 58 liegt nun in den Schwenkebenen der Verlängerung 54 des Sicherungshebels 46 und des Fortsatzes 40 des zweiten Koppelteils 36. Mit der nun einsetzenden Schwenkbewegung aus der in Fig. 3 dargestellten Lage läuft nun die Steuerkurve 56 gegen den Steueranschlag 58. Mit Fortschreiten der Schwenkbewegung der Schwinge 18 wird nun die Verlängerung 54 in Richtung des Pfeiles 76 um die Gelenkstelle 42 verschwenkt, wobei die Rastnase 48 des Sicherungshebels 46 entgegen der Kraft des Federelements 52 aus der Rastaufnahme 50 gehoben wird. Gleichzeitig wird die Vorspannung des Federelements 52 erhöht, wodurch das nun ungesicherte Gelenk 34 ausgeknickt wird. Die Aushebebewegung wird durch die durch das Langloch 62 und den Vorsprung 64 gebildete Schwenkbegrenzung gestoppt, so daß die weitere, durch die Schwinge 18 erzwungene Schwenkbewegung von der Steuerkurve 56 aus auf die Koppel übertragen wird, wo sie das Ausknicken der beiden Koppelteile 30, 36 in Richtung des Pfeiles 77 bewirkt. Wenn nun die Schwinge 18 aus ihrer in Fig. 3 gezeigten einen Umkehrlage in die andere Umkehrlage geschwenkt worden ist, hat der Schwenkhebel 26 einen um den Betrag $\beta$ größeren Winkel zurückgelegt (Fig. 5). Wenn nun der Schwenkhebel 26 einen Schwenkwinkel $\alpha$ plus $\beta$ zurückgelegt hat, ist gleichzeitig zwangsläufig auch der Wischerarm 22 und mit diesem das Wischblatt 24 um einen Winkel $\alpha$ plus $\beta$ gleich $\gamma$ (Fig. 5) verschwenkt worden. In dieser Stellung befinden sich nun der Wischerarm 22 und das Wischblatt 24 in einem Schacht der Fahrzeugkarosserie, in seiner sogenannten Ablagestellung, in der der Elektromotor des Antriebsaggregats 10 stromlos wird. Dies gilt auch für den Elektromagneten 60. Damit aber der Steueranschlag 58 nicht durch einen in dem Elektromagneten 60 angeordnete Rückholfeder 78 aus den Schwenkebenen der beiden Steuerkurven 44, 56 herausgezogen wird, ist das freie Ende des Steueranschlags 58 mit einer Tellerscheibe 80 versehen, die über den Durchmesser des Steueranschlags 58 ragt. Die Tellerscheibe 80 liegt dann auf den von dem Elektromagneten 60 abgewandten Seiten des Fortsatzes 40 und der Verlängerung 54 auf und sichert den Steueranschlag 58 in seiner für das erneute Inbetriebnehmen der Vorrichtung wichtigen Stellung. In dem Bereich, in welchem die Steuerkurven 44 und 56 mit dem Steueranschlag 58 zusammenwirken, kann dieser mit einer Gleitrolle ausgestattet sein.

Wenn nun das Wischblatt aus seiner in Fig. 5 gezeigten Ablagestellung heraus wieder in Betrieb genommen werden soll, wird das Antriebsaggregat 10 eingeschaltet, wonach die Schubstange 16, die Schwinge 18 und den mit dieser verbundenen Mechanismus in Richtung des Pfeiles 82 bewegt (Fig. 5). Dabei kommt die Steuerkurve 44 an dem Steueranschlag 58 zur Anlage und das zweite Koppelteil 36 wird in Richtung des Pfeiles 84 geschwenkt, bis die beiden Koppelteile 30, 36 die in Fig. 4 dargestellte Lage einnehmen. Diese Lage ist in Fig. 5 strichpunktiert gezeichnet. In dieser Stellung zieht das Federelement 52 die Rastnase 48 des Sicherungshebels 46 in die Rastaufnahme 50 und verriegelt das Gelenk 34. Nun ist die eingangs beschriebene Betriebslage, d. h. das in sich starre Viergelenk wieder hergestellt und das Wischblatt wird entsprechend der Bewegung der Kurbel 14 zwischen seinen in den Fig. 3 und 4 dargestellten, um den Winkel voneinander versetzten Umkehrlagen verschwenkt. An der Schwinge 18 ist also wie eingehend erläutert, ein steuerbarer Mechanismus angeordnet, der eine Wirkverbindung zwischen der Schwinge 18 und der Wischerwelle 20 herstellt. Zu diesem Mechanismus gehören die beiden Koppelteile 30, 36 der Fortsatz 40 des zweiten Koppelteils 36, der Sicherungshebel 46 und dessen Verlängerung 54, die beiden Steuerkurven 44 und 56 sowie die Verriegelungselemente 48, 50 und 52 des Gelenks 34.

Vorteile der erfindungsgemäßen Wischvorrichtung sind: Das rasche Herausfahren des Wischblatts aus seiner Ablagestellung, die Möglichkeit bei kompakter Bauweise große Erweiterungswinkel (β) zu erreichen, nur kurze Magneteinstelldauer, bei Magnetausfall wird der Steueranschlag 58 durch die Rückholfeder 78 zurückgedrückt, so daß der Wischbetrieb nicht gestört ist.

**Patentansprüche**

1. Wischvorrichtung für Scheiben von Kraftfahrzeugen, mit einem an seinem einen Ende ein auf der Scheibe liegendes Wischblatt tragenden Wischerarm (22), dessen anderes Ende mit einer pendelnd angetriebenen Wischerwelle (20) verbunden ist und mit einem Antriebsaggregat (10), an dessen umlaufend angetriebener Antriebswelle (12) eine Kurbel angeordnet ist, die über eine gelenkig mit ihr verbundene Schubstange (16) mit einer Schwinge (18) wirkverbunden ist, welche an der Wischerwelle angeordnet und über einen steuerbaren Gelenkmechanismus mit der Wischerwelle (20) wirkverbunden ist, dadurch gekennzeichnet, daß an der freischwingend gelagerten Schwinge (18) eine einseitig an dieser angelenkte, zwei miteinander gelenkig verbundene Teile (30, 36) aufweisende Koppel (28) angeordnet ist, deren Teile (30, 36) in dem Gelenk (34) miteinander verrastbar sind und daß der Gelenkmechanismus (30, 34, 36) einen an der anderen Seite der Koppel (28) angelenkten Schwenkhebel (26) aufweist, der fest mit der Wischerwelle (20) verbunden ist.

2. Wischvorrichtung nach Anspruch 1, dadurch gekennzeichnet, daß die Schwinge (18) koaxial zur Wischerwelle (20) gelagert ist.

3. Wischvorrichtung nach einem der Ansprüche 1 oder 2, dadurch gekennzeichnet, daß in dem Gelenk (34) der mit dem Schwenkhebel (26) verbundenen Koppel (28) eine Rastaufnahme (50) angeordnet ist, in welche eine Rastnase (48) eines Sicherungshebels (46) greift.

4. Wischvorrichtung nach Anspruch 3, dadurch gekennzeichnet, daß der zweite mit der Schwinge (18) gelenkig verbundene Koppelteil (36) und der Sicherungshebel (46) durch ein Federelement (52) aufeinander zu vorgespannt sind.

5. Wischvorrichtung nach einem der Ansprüche 3 oder 4, dadurch gekennzeichnet, daß der Sicherungshebel (46) als zweiarmiger Hebel ausgebildet ist, dessen einer Arm die Rastnase (48) und dessen anderer Arm (40) eine Steuerkurve (44) aufweisen und daß der Sicherungshebel (46) zwischen der Rastnase (48) und der Steuerkurve (44) vorzugsweise an der Schwinge (18) pendelbar gelagert ist.

6. Wischvorrichtung nach einem der Ansprüche 3 bis 5, dadurch gekennzeichnet, daß der zweite Koppelteil (36) als zweiarmiger Hebel ausgebildet ist, dessen einer Hebelarm mit dem ersten Koppelteil (30) gelenkig verbunden ist und dessen anderer Hebelarm (54) einer Steuerkurve (56) aufweist.

7. Wischvorrichtung nach einem der Ansprüche 5 oder 6, dadurch gekennzeichnet, daß jede Steuerkurve (44 bzw. 56) mit einem in die Bewegungsebene der jeweiligen Steuerkurve bringbaren und aus dieser entfernbaren Anschlag (58) zusammenarbeitet.

8. Wischvorrichtung nach Anspruch 7, dadurch gekennzeichnet, daß der Anschlag ein bolzenförmiger Kern (58) eines Elektromagneten (60) ist.

9. Wischvorrichtung nach einem der Ansprüche 3 bis 7, dadurch gekennzeichnet, daß der Sicherungshebel (46) mit einer Schwenkbegrenzung (62, 64) gegenüber dem zweiten Koppelteil (36) versehen ist.

10. Wischvorrichtung nach Anspruch 9, dadurch gekennzeichnet, daß die Schwenkbegrenzung durch ein Langloch (62) in dem Fortsatz (40) und mit einem in das Langloch (62) greifenden Vorsprung (64) des Sicherungshebels (46) gebildet ist.

## Claims

1. Wiper device, for panes of motor vehicles, with a wiper arm (22), which at its one end carries a wiper blade lying on the pane and the other end of which is connected with a pendulatingly driven wiper shaft (20), and with a drive unit (10), at the circulatingly driven output shaft (12) of which is arranged a crank which is effectively connected through a connecting rod (16), which is articulatedly connected with the crank, with a rocker (18), which is arranged at the wiper shaft and effectively connected through a controllable linkage with the wiper shaft (20), characterised thereby, that arranged on the free-swingingly borne rocker (18) is a coupler (28), which is one-sidedly articulated to this rocker and displays two parts (30, 36) articulatedly connected each with the other and the parts (30, 36) of which are detentable in the joint (34) each with the other, and that the linkage (30, 34, 36) displays a pivot lever (26), which is articulated at the other side of the coupler (28) and firmly connected with the wiper shaft (20).

2. Wiper device according to claim 1, characterised thereby, that the rocker (18) is borne co-axially with the wiper shaft (20).

3. Wiper device according to one of the claims 1 or 2, characterised thereby, that a detent receptacle (50), into which a detent lug (48) of a securing lever (46) engages, is arranged in the joint (34) of the coupler (28) connected with the pivot lever (26).

4. Wiper device according to claim 3, characterised thereby, that the second coupler part (36) articulatedly connected with the rocker (18) and the securing lever (46) are biassed each towards the other through a spring element (52).

5. Wiper device according to one of the claims 3 or 4, characterised thereby, that the securing lever (46) is constructed as two-armed lever, the one arm of which displays the detent lug (48) and the other arm of which displays a control cam (44) and that the securing lever (46) is pendulatingly borne between the detent lug (48) and the control cam (44), preferably at the rocker (18).

6. Wiper device according to one of the claims 3 to 5, characterised thereby, that the second coupler part (36) is constructed as two-armed lever, the one lever arm of which is articulatedly connected with the first coupler part (30) and the other lever arm (54) of which displays a control cam (56).

7. Wiper device according to one of the claims 5 or 6, characterised thereby, that each control cam (44 or 56) co-operates with an abutment (58) bringable into and removable out of the plane of movement of the respective control cam.

8. Wiper device according to claim 7, characterised thereby, that the abutment is a bolt-shaped core (58) of an electro-magnet (60).

9. Wiper device according to one of the claims 3 to 7, characterised thereby, that the securing lever (46) is provided with a pivot limitation (62, 64) relative to the second coupler part (36).

10. Wiper device according to claim 9, characterised thereby, that the pivot limitation is formed by an elongate hole (62) in the prolongation (40) and a projection (64), engaging into the elongate hole (62), of the securing lever (46).

## Revendications

1. Dispositif d'essuie-glace pour véhicules automobiles, comportant une tige d'essuie-glace (22), portant à l'une de ses extrémités une raclette d'essuie-glace appliquée sur la glace, et dont l'autre extrémité est reliée à un arbre d'essuie-glace (20) qui est entraîné en un mouvement oscillant, et comportant un groupe moteur (10) sur l'arbre de sortie (12) duquel, entraîné en un mouvement circulaire, est montée une manivelle qui est en liaison active, par l'intermédiaire d'une bielle (16) reliée à elle par articulation, avec une biellette oscillante (18), laquelle est montée sur l'arbre de l'essuie-glace et est en liaison active, par l'intermédiaire d'un mécanisme d'articulations pouvant se commander, avec l'arbre (20) de l'essuie-glace, — caractérisé en ce que sur la biellette oscillante (18), supportée de façon à pouvoir osciller librement, est montée une barre d'accouplement (28) articulée sur elle d'un seul coté et comportant deux éléments (30, 36) reliés l'un à l'autre par articulation, barre d'accouplement (28) dont les éléments (30, 36) peuvent se cranter l'un avec l'autre dans l'articulation (34), et en ce que le mécanisme d'articulations (30, 34, 36) est pourvu d'un levier pivotant (26) articulé sur l'autre coté de la barre d'accouplement (28) et qui est relié rigidement à l'arbre (20) de l'essuie-glace.

2. Dispositif d'essuie-glace selon la revendication 1, caractérisé en ce que la bielette oscillante (18) est montée coaxialement à l'arbre (20) de l'essuie-glace.

3. Dispositif d'essuie-glace selon l'une des revendications 1 ou 2, caractérisé en ce que, dans l'articulation (34) de la barre d'accouplement (28) reliée au levier pivotant (26), est ménagé un logement de cran d'arrêt (50) dans lequel s'engage un talon de crantage (48) d'un levier de sureté (46).

4. Dispositif d'essuie-glace selon la revendication 3, caractérisé en ce que le second élément (36) de la barre d'accouplement, relié à la bielette oscillante (18), et le levier de sûreté (46) sont soumis à une précontrainte l'un envers l'autre au moyen d'un élément à ressort (52).

5. Dispositif d'essuie-glace selon l'une des revendications 3 ou 4, caractérisé en ce que le levier de sûreté (46) est constitué sous forme de levier à deux bras, dont un bras comporte le talon de crantage (48) et dont l'autre bras (40) présente une courbe de commande (44), et en ce que le levier de sûreté (46) est monté, de façon à pouvoir osciller, entre le talon de crantage (48) et la courbe de commande (44) de préférence sur la bielette socillante (18).

6. Dispositif d'essuie-glace selon l'une des revendications 3 à 5, caractérisé en ce que le second élément (36) de la barre d'accouplement est constitué sous forme de levier à deux bras, dont un bras est relié par articulation au premier élément (30) de la barre d'accouplement et dont l'autre bras (54) présente une courbe de commande (56).

7. Dispositif d'essuie-glace selon l'une des revendications 5 ou 6, caractérisé en ce que chaque courbe de commande (44 ou 56) coopère avec une butée (58) pouvant être amenée dans le plan de déplacement de la courbe de commande considérée et pouvant en être éloignée.

8. Dispositif d'essuie-glace selon la revendication 7, caractérisé en ce que la butée est un noyau (58), en forme de boulon, d'un électroaimant (60).

9. Dispositif d'essuie-glace selon l'une des revendications 3 à 7, caractérisé en ce que le levier de sûreté (46) est pourvu d'une limitation de pivotement (62, 64) par rapport au second élément (36) de la barre d'accouplement.

10. Dispositif d'essuie-glace selon la revendication 9, caractérisé en ce que la limitation du pivotement est formée au moyen d'un trou oblong (62) ménagé dans le prolongement (40) et avec une saillie (64) du levier de sûreté (46) engagée dans le trou oblong (62).

FIG. 1

FIG. 2

FIG. 3

# FIG. 4

# FIG.5